Europäisches Patentamt

European Patent Office

Office européen des brevets

(19)

(11) Veröffentlichungsnummer: **0 036 165**
B1

(12) **EUROPÄISCHE PATENTSCHRIFT**

(45) Veröffentlichungstag der Patentschrift:
18.07.84

(51) Int. Cl.³: **G 21 C 11/08**

(21) Anmeldenummer: **81101725.0**

(22) Anmeldetag: **09.03.81**

(54) **Wärmedämm-Baustein in Ganzmetall-Bauweise.**

(30) Priorität: **17.03.80 DE 3010256**

(43) Veröffentlichungstag der Anmeldung:
**23.09.81 Patentblatt 81/38**

(45) Bekanntmachung des Hinweises auf die Patenterteilung:
**18.07.84 Patentblatt 84/29**

(84) Benannte Vertragsstaaten:
**AT BE CH DE FR GB IT LI LU NL SE**

(56) Entgegenhaltungen:
**DE - A - 2 149 088
DE - A - 2 632 467
DE - A - 2 653 693
DE - A - 2 657 276
DE - A - 2 729 453
DE - A - 2 734 348**

(73) Patentinhaber: **KRAFTWERK UNION
AKTIENGESELLSCHAFT, Wiesenstrasse 35,
D-4330 Mülheim (Ruhr) (DE)**
Patentinhaber: **Grünzweig + Hartmann Montage GmbH,
Westendstrasse 17, D-6700 Ludwigshafen/Rhein (DE)**

(72) Erfinder: **Scholz, Manfred, Zeiss-Strasse 8,
D-8520 Erlangen (DE)**
Erfinder: **Fricker, Wolfgang-Peter, An der Quelle 23,
D-6713 Freinsheim (DE)**

(74) Vertreter: **Mehl, Ernst, Dipl.-Ing. et al, Postfach 22 01 76,
D-8000 München 22 (DE)**

BUNDESDRUCKEREI BERLIN

**Beschreibung**

Die Erfindung bezieht sich auf einen in seinen Maßen veränderbaren Wärmedämm-Baustein in Ganzmetall-Bauweise gemäß dem Oberbegriff des Anspruchs 1.

Durch die DE-A1-2 734 348 und die DE-A1-2 729 453 sind Wärmedämm-Bausteine in Ganzmetallbauweise bekannt, welche zueinander beabstandete wärmebeweglich gelagerte metallische Dämmfolien zur Bildung dazwischenliegender Dämmzellen aufweisen und ferner die Dämmfolien im Abstand zueinander haltende Abstandshalteelemente sowie die Dämmfolien und Abstandshalteelemente tragende und mindestens teilweise umfassende Gehäusebleche. Diese bekannten Wärmedämm-Bausteine sind indessen nicht in ihren Maßen, d. h. in ihren äußeren Abmessungen, veränderbar, wenn sie auch bereits in ihrem Innern eine wärmebewegliche und trotzdem weitestgehend konvektionsdichte Halterung der Dämmfolien aufweisen, so daß Zwänge und Verformungen aufgrund verhinderter Wärmedehnung vermieden sind.

Die letzterwähnten vorteilhaften Eigenschaften soll auch der Wärmedämm-Baustein gemäß der vorliegenden Erfindung aufweisen, d. h., er soll zur Aufnahme der thermischen Dehnungen der wärmezudämmenden Komponente oder Rohrleitung und seiner eigenen thermischen Dehnungen in axialer, radialer und tangentialer Richtung geeignet sein. Darüber hinaus liegt der Erfindung die Aufgabe zugrunde, den Wärmedämm-Baustein der eingangs genannten Art so auszubilden, daß er zur Aufnahme der folgenden Maß- bzw. Fertigungstoleranzen geeignet ist:

1. Diejenigen der wärmezudämmenden Komponenten und seiner eigenen in radialer, axialer und tangentialer Richtung;
2. der umschließenden Einbauten, z. B. derjenigen des biologischen Schildes bei Kernreaktoranlagen;
3. der Zubehörteile, z. B. diejenigen der Ausschlagsicherungs-Durchführungen und -Halterungen.

Erfindungsgemäß wird die gestellte Aufgabe durch die im Kennzeichen des Anspruchs 1 angegebenen Merkmale gelöst. Vorteilhafte Weiterbildungen sind in den Unteransprüchen beschrieben.

Die mit der Erfindung erzielbaren Vorteile sind vor allem darin zu sehen, daß nun die Möglichkeit der Vorfertigung der Wärmedämmung ohne eine Feinmaßkontrolle gegeben ist. Bei der Montage können Änderungsarbeiten, die erfahrungsgemäß sehr kostspielig sind, entfallen, weil man die Maß- und Fertigungstoleranzen beherrscht. Der erfindungsgemäße Wärmedämm-Baustein eignet sich weiterhin hervorragend zur Aufnahme der Differenzdehnung zwischen einer fest installierten und einer abnehmbaren Wärmedämmung. Derartige Wärmedämmungen sind insbesondere bei Primärkreiskomponenten von Kernreaktoranlagen erforderlich, bei denen zum Zwecke der Wiederholungsprüfung mit Ultraschall bestimmte Teile der Wärmedämmung abnehmbar und wieder remontabel sein müssen. Wie erwähnt, können fertigungsbedingte Maßtoleranzen durch den Wärmedämm-Baustein während der Montage ausgeglichen werden. Aufgrund des genauen Sitzes der montierten Wärmedämmung wird dann eine Heißluftkonvektion zwischen der Wärmedämmung und der wärmezudämmenden Komponente oder Rohrleitung sicher vermieden.

Im folgenden wird anhand der mehrere Ausführungsbeispiele darstellenden Zeichnung die Erfindung noch näher erläutert. Es zeigt in vereinfachter, schematischer Darstellung unter Fortlassung der für das Verständnis der Erfindung nicht wesentlichen Teile

Fig. 1 im Ausschnitt perspektivisch die Wärmedämmung eines zylindrischen Reaktordruckbehälters mit den einzelnen axial und tangential aneinandergereihten Wärmedämm-Bausteinen;

Fig. 2 eine Abwandlung des Gegenstandes nach Fig. 1 mit von Bausteinlage zur Bausteinlage um eine halbe Baustein-Teilung versetzten Trennfugen;

Fig. 3 den Schnitt nach der Linie III-III aus Fig. 1, d. h. einen einzelnen, in seiner Achs- bzw. Höhenrichtung längenveränderbaren Wärmedämm-Baustein;

Fig. 4 den Teilschnitt IV-IV aus Fig. 3;

Fig. 4a perspektivisch eine einzelne an ihrem unteren Rand doppelt abgekantete Wärmedämmfolie für den Baustein nach Fig. 3;

Fig. 4b eine Abwicklung der Metallfolie nach Fig. 4a im Ausschnitt;

Fig. 4c ein im Vergleich zur Metallfolie nach Fig. 4 dünneres Kaschierblech zur Abdeckung der Einschnitte im Abkantbereich;

Fig. 5 den Teilschnitt V-V aus Fig. 3;

Fig. 5a in entsprechender Darstellung zu Fig. 4a perspektivisch eine einzelne Dämmfolie aus Fig. 3, bei der jedoch der doppelt abgekantete Randbereich auf der konvexen Seite angeordnet ist;

Fig. 5b eine Abwicklung der Dämmfolie nach Fig. 5a im Ausschnitt;

Fig. 5c wieder ein dünneres Kaschierblech zur Abdeckung der Schlitze im doppelt abgekanteten Randbereich der Dämmfolie nach Fig. 5a;

Fig. 6 ein zweites Ausführungsbeispiel für den Wärmedämmbaustein nach Fig. 3, bei dem die aneinandergleitenden Dämmfolien nur bei der einen Bausteinhälfte an ihrem unteren Rand doppelt abgekantet sind, wobei ferner die Konvektionsdichtung der Gehäusebleche dargestellt ist;

Fig. 7 den Schnitt nach der Linie VII-VII aus Fig. 1, d. h. in horizontaler Richtung in seinen Maßen veränderbar ist;

Fig. 8 einen Kombinations-Baustein in perspektivischer Darstellung, welcher sowohl in axialer bzw. Höhenrichtung als auch in tangentialer bzw. horizontaler Richtung in seinen Maßen veränderbar ist und

Fig. 8a einen Konstanthalter im Ausschnitt.

Als Material für die Dämmfolien und Gehäusebleche der im folgenden beschriebenen Wärmedämm-Bausteine kommt insbesondere korrosionsbeständiges austenitisches Blech infrage. Die Bausteine 2a können darüber hinaus gasdicht geschweißt sein (kein Eindringen von Flüssigkeiten, Gasen oder Dämpfen!). Die Bausteine 2b bis 2d können spritzwasserdicht und weitgehend wasserdicht ausgeführt werden.

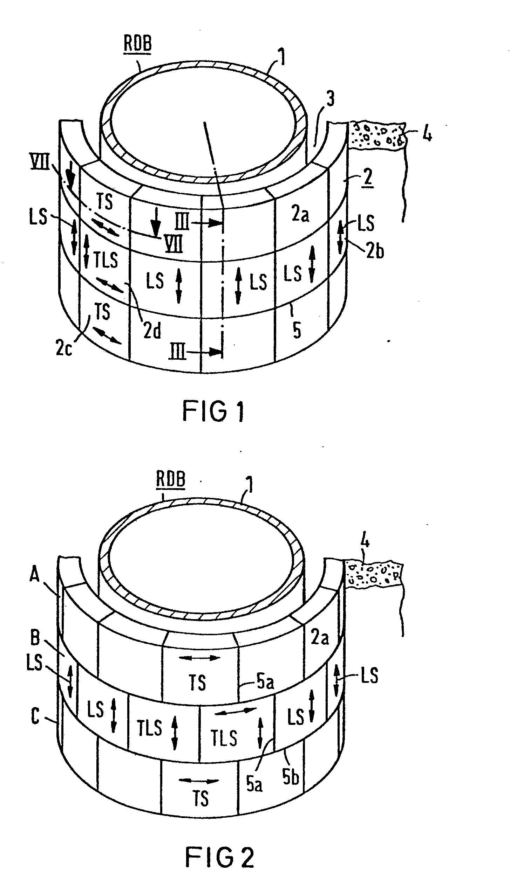

In Fig. 1 ist die Wandung 1 eines im wesentlichen hohlzylindrischen Reaktordruckbehälters RDB schematisch angedeutet. Zwischen dieser Wandung 1 und der den Reaktordruckbehälter RDB umgebenden, als Ganzes mit 2 bezeichneten Wärmedämmung befindet sich ein Ringspalt 3, welcher bei Druckwasserreaktoren insbesondere als Kühlluftspalt und bei Siedewasserreaktoren als Inspektionsringspalt dient, weil bei letzterem die Druckbehälter-Wiederholungsprüfung im wesentlichen als eine sogenannte Außenprüfung durchgeführt wird. Die Wärmedämmung 2 besteht aus einzelnen Wärmedämm-Bausteinen 2a, 2b, 2c und 2d in Ganzmetallbauweise. 2a sind die aneinanderfügbaren, im kalten Zustand praktisch maßkonstanten Wärmedämm-Bausteine, im folgenden kurz Normal-Bausteine bezeichnet, welche durch nicht näher dargestellte Kupplungs- oder Befestigungsflansche miteinander und/oder am Innenumfang des bei 4 angedeuteten biologischen Schildes gekuppelt bzw. befestigt sind. Daneben sind aber noch die in ihren Maßen veränderbaren Wärmedämm-Bausteine 2b, 2c, 2d gemäß der Erfindung installiert, und zwar die in Längs- bzw. Vertikalrichtung einen Schiebesitz bildenden Bausteine 2b, deren Schiebesitz durch die Pfeile LS angedeutet ist; die in tangentialer bzw. Horizontal-Richtung einen Schiebesitz TS bildenden Bausteine 2c und schließlich der Baustein 2d, der sowohl in Längsrichtung als auch in tangentialer Richtung einen Schiebesitz TLS bildet und im Bereich der Kreuzung des durch die Bausteine 2b gebildeten Dämmungsringes mit den in vertikaler Richtung übereinandergestapelten Bausteinen 2c angeordnet ist. Durch die Pfeile LS, TS und TLS ist symbolisiert, daß durch die Bausteine 2b, 2c und 2d sowohl ein Ausgleich von Fertigungstoleranzen bei der Montage der Wärmedämmung erreicht werden kann als auch ein Ausgleich von betriebsmäßig auftretenden Wärmedehnungen, wobei immer eine konvektionsdichte Fugenabdichtung im Bereich der Trennfugen 5 zwischen den einzelnen Bausteinen erhalten bleibt.

Fig. 2 zeigt eine Variante der Anordnung der Wärmedämm-Bausteine 2, bei der wie bei einem Ziegel-Bauwerk die vertikalen Trennfugen 5a von Lage zu Lage A, B, C usw. um eine halbe Baustein-Teilung gegeneinander versetzt sind. Der Verband der Wärmedämmung kann dadurch in bezug auf Zusammenhalt und Konvektionsdichtkeit unter Umständen verbessert werden.

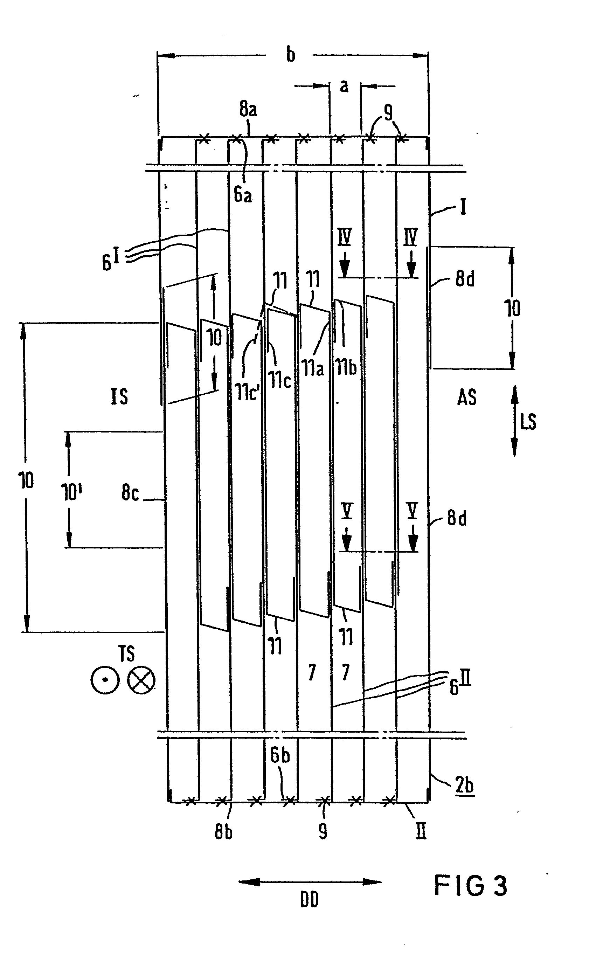

Fig. 3 zeigt einen einzelnen Baustein 2b, der in Ganzmetall-Bauweise ausgeführt und in seinen Maßen veränderbar ist. Er weist zueinander beabstandete, wärmebeweglich gelagerte metallische Dämmfolien 6 zur Bildung dazwischenliegender Dämmzellen 7 auf. AS ist die sogenannte kalte bzw. Außenseite und IS die sogenannte heiße oder Innenseite des Dämmbausteins, wobei die Innenseite dem Reaktordruckbehälter RDB und die Außenseite AS dem biologischen Schild 4 zugewandt ist. Die Abstandshaltefunktion ist beim Beispiel nach Fig. 3 dadurch bewirkt, daß die einzelnen Dämmfolien 6 an ihren an das deckseitige Gehäuseblech 8a anstoßenden Enden abgekantet und mit ihren Abkantungen 6a bzw. 6b an den genannten Gehäusblechen mittels Punktschweißen befestigt sind (siehe Punktschweißungen 9). b stellt die Dämmdicke des Bausteins in Dämmrichtung dar, a die Dämmdicke einer einzelnen Dämmzelle 7 bzw. den Abstand zweier in Dämmrichtung aufeinanderfolgender Dämmfolien 6. Außer den deck- und bodenseitigen Gehäuseblechen 8a und 8b sind in Fig. 3 noch die innenseitigen und außenseitigen Gehäusebleche 8c und 8d erkennbar, dagegen nicht die in die tangentiale Richtung weisenden beiden Gehäusebleche.

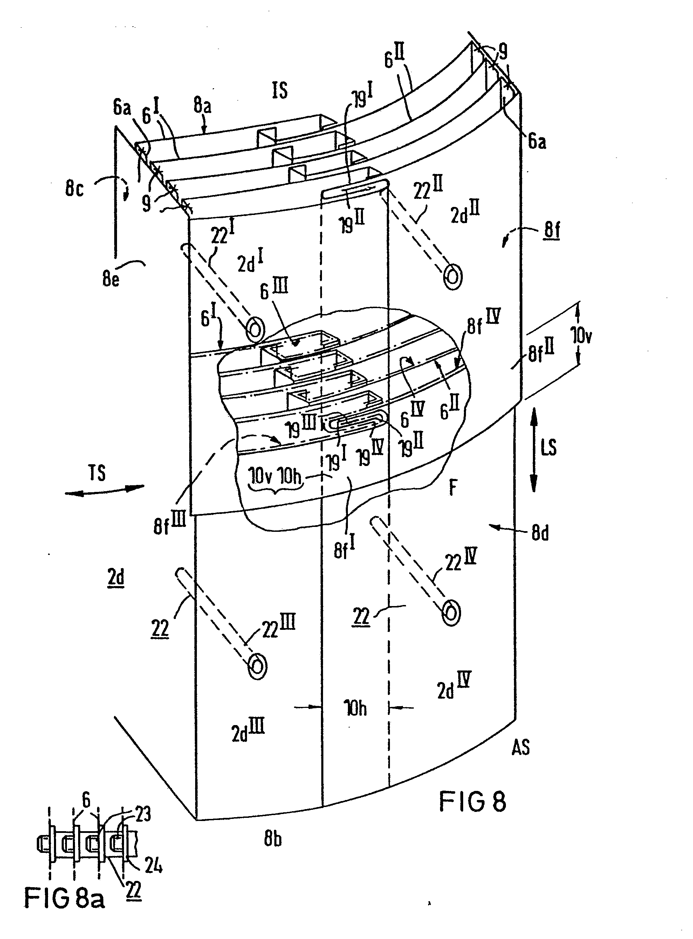

Erfindungsgemäß besteht nun der Baustein 2b aus den beiden Bausteinteilen I und II, die mit ihren Gehäuseblechen 8c, 8d und mit ihren aus Fig. 3 nicht ersichtlichen, jedoch aus Fig. 8 erkennbaren seitlichen Blechen 8e, 8f jeweils wechselseitig in konvektionshemmendem Schiebesitz aneinanderliegend ineinandergeschachtelt sind. Dabei sind jeweils in Schubrichtung LS des Schiebesitzes Überlappungsstrecken 10 an den aneinanderliegenden Dämmfolien 6 und Gehäuseblechen 8c, 8d (und entsprechend 8e, 8f) vorgesehen, welche größer sind als die vorgegebene maximale Vergrößerung des Bausteins 2b durch Auseinanderziehen der Bausteinteile I, II in Schubrichtung LS. Im einzelnen sind die Dämmfolien 6 der Bausteinteile I, II an ihren freien Enden mit jeweils die betreffende Dämmzelle 7 überbrückenden Abbiegungen 11 so versehen, daß sie mit den Abbiegungen 11 an den in Richtung der Dämmdicke jeweils benachbarten Dämmfolien des Gegen-Bausteinteils elastisch-dichtend und wenigstens linienförmig anliegen. Die Abbiegungen 11 gemäß Fig. 3 sind als doppelte Abkantungen mit den Abbiegekanten 11a und 11b ausgebildet. Die freien Schenkel 11c der Abbiegungen 11 stehen, wie bei 11c' gestrichelt angedeutet, im nicht montierten Zustand etwas über den Abstand a hinaus; sie werden dann bei der Montage, d. h. beim Ineinanderschieben der beiden Bausteinhälften I, II elastisch deformiert und dabei einwärts gebogen, so daß auf diese Weise die elastisch-dichtende Anlage zustande kommt. Beim Ausführungsbeispiel nach Fig. 3 ist ersichtlich jeder der Bausteinteile I, II an den freien Enden seiner Dämmfolien 6 mit den Abbiegungen 11 versehen wobei die Bausteinteile I, II paarweise wechselseitig mit ihren Abbiegungen 11 ineinandergeschachtelt sind. Man erreicht dadurch eine doppelte Konvektionsdichtung. Weiterhin ist erkennbar, daß die Abbiegungen 11 des einen Bausteinteils I zu den Abkantungen 11 des Gegen-Bausteinteils II etwa punktsymmetrisch angeordnet sind, d. h. die Abbiegungen 11 beider Bausteinhälften I, II weisen in Gegenzeigerrichtung. Die einzelnen Dämmfolien 6 können sich, ausgehend von ihren Befestigungspunkten 9 an den Gehäuseblechen 8a, 8b frei dehnen und zusammenziehen; in Schieberichtung LS läßt sich darüber hinaus jedoch auch der Baustein 2b in seinen Maßen verändern, indem die beiden Bausteinhälften I, II mehr oder weniger weit auseinandergezogen oder ineinandergeschoben werden, wobei jedoch eine Mindestüberlappungsstrecke 10' erhalten bleiben muß. Fig. 3 in Verbindung mit Fig. 1 und 2 zeigt demnach, daß der Baustein 2b zur Anpassung einer aus aneinanderfügbaren, im kalten Zustand praktisch maßkonstanten Wärmedämm-Bausteinen 2a bestehenden Wärmedämmung 2 in der Axial- bzw. Vertikal-Richtung LS an die zu dämmende Komponente RDB oder Rohrleitung dient und daß hierzu in Richtung der Dämmdicke DD und in Horizontal- bzw. Umfangsrichtung TS feste, im genannten Sinne den maßkonstanten Wärmedämm-Bausteinen 2a entsprechende Abmaße aufweist, dagegen in der Vertikal- bzw. Axial-Richtung LS in seinen Maßen einstellbar ist.

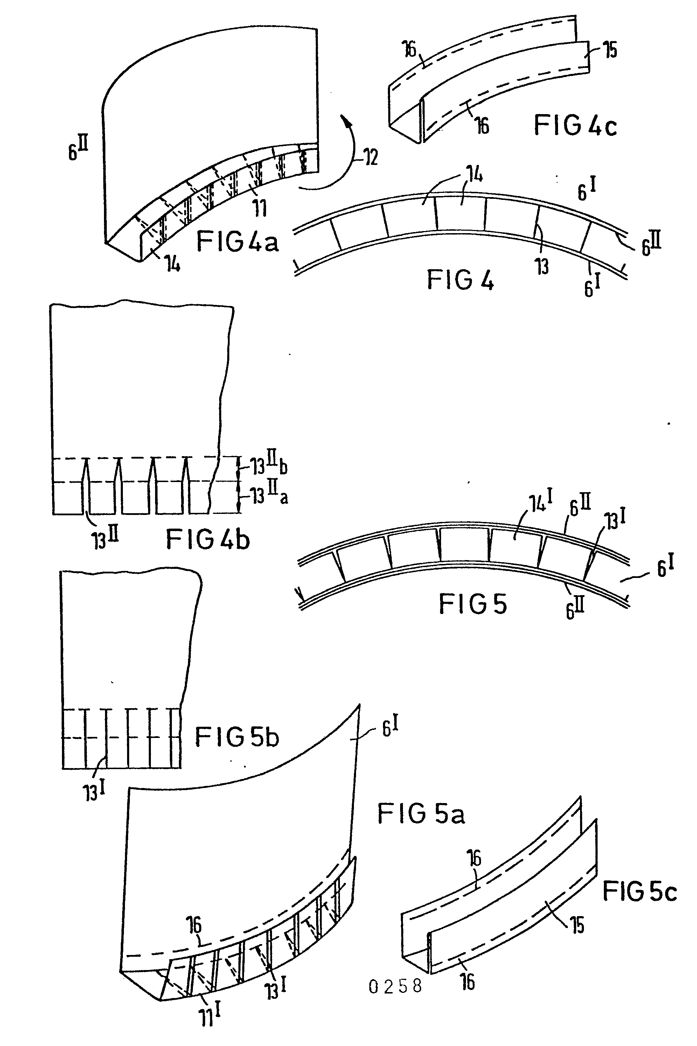

Bei sehr großem Krümmungsradius der zu dämmenden Komponente kann der Baustein 2b praktisch quaderförmig sein; wenn jedoch die Krümmung berücksichtigt werden muß, dann sind die Gehäusebleche 8c, 8d und entsprechend die Dämmfolien 6 gewölbt, und der Zuschnitt der deckseitigen Gehäusebleche 8a und bodenseitigen 8b ist kreisringsegmentförmig von der Außenseite AS zur Innenseite IS verjüngt, wogegen die in tangentialer Richtung weisenden Gehäusebleche 8e, 8f (vgl. Fig. 8) praktisch Rechteckform beibehalten. Fig. 4 bis 4c zeigen Einzelheiten der Ausbildung der Dämmfolien 6 im Bereich ihrer Abkantungen 11 für den Fall, daß die Abkantungen 11 auf der konkaven Seite der Dämmfolien 6 angeordnet sind. Es handelt sich dabei um die Dämmfolien 6 der unteren Bausteinhälfte II, was durch das Bezugszeichen 6$^{II}$ zum Ausdruck gebracht ist. Die Dämmfolie 6$^{II}$ ist der einfacheren Darstellung wegen in Fig. 4a allerdings auf den Kopf gestellt; ihre richtige Montagelage gemäß Fig. 3 erhält man, wenn man sie gemäß Pfeil 12 in die Aufrechtposition bringt, bei der die Abkantungen 11 oben sind. Zwecks Ermöglichung der Abkantungen 11 trotz gekrümmter Dämmfolie 6$^{II}$ ist diese im Bereich der Abkantungen mit Schlitzen 13 versehen, vgl. auch die Abwicklung nach Fig. 4b. Im fertig abgekanteten und gekrümmten Zustand nach Fig. 4a stoßen dann die durch die Einschnitte 13 gebildeten Zungen 14 maßgerecht und satt aneinander, so daß die Konvektionsdichtheit, vgl. Fig. 4, praktisch nicht beeinträchtigt ist. Zur vollständigen Konvektionsdichtung kann man aber noch eine Kaschierfolie 15 von geringerer Wandstärke als diejenige der Dämmfolien 6 über die Abkantungen 11 formschlüssig schieben und mittels Punkt- oder Linienschweißung innerhalb der durch die Strichelung 16 angedeuteten Bereiche mit der Dämmfolie 6$^{II}$ jeweils verbinden. Wie es Fig. 4b zeigt, sind die Schlitze im Bereich 13$^{IIa}$ verbreitert und laufen dann im Bereich 13$^{IIb}$ spitzwinklig zusammen. Diese Form ist deshalb gewählt, weil beim Biegen in die gekrümmte Form nach Fig. 4a sich dann die Schlitzkanten gemäß Fig. 4 schließen.

Fig. 5 bis 5c zeigen die Verhältnisse im Bereich der Abkantungen 11$^I$ einer Dämmfolie 6$^I$, bei der ersichtlich die Abkantungen auf der konvexen Seite der Dämmfolie 6$^I$ angeordnet sind. Dabei sind, vgl. Fig. 5b, die Schlitze 13$^I$ als einfache Einschnitte ausgebildet. Wenn dann die Dämmfolie 6$^I$ mit ihren Abkantungen 11$^I$ versehen und in die gewölbte Form gebogen wird, dann bilden sich im Bereich der Abkantungen 11 spitzwinklig klaffende Spalte 13$^I$ aus. Diese kann man wieder durch Applizieren einer Kaschierfolie 15 (Fig.5c) vollständig abdecken, so daß die Konvektionsdichtheit nicht beeinträchtigt ist.

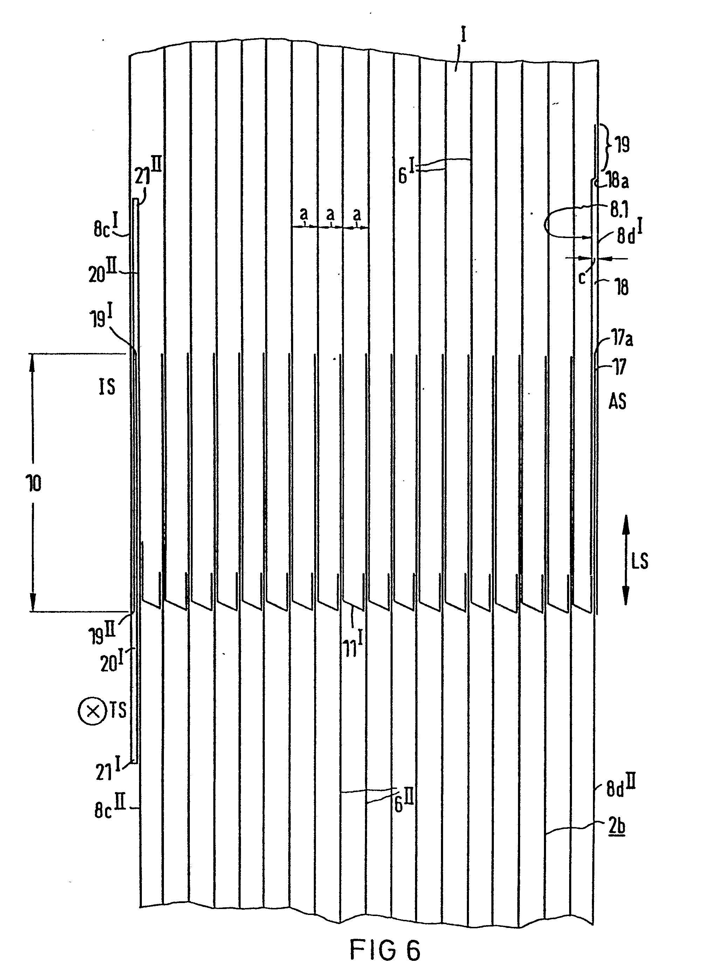

Fig. 6 zeigt ein zweites Ausführungsbeispiel, das hinsichtlich der Dämmfolien-Ausbildung vereinfacht ist. Es sind nämlich nur die Dämmfolien 6$^I$ mit den Abkantungen 11$^I$ versehen, wogegen die Dämmfolien 6$^{II}$ an ihren freien Enden glatt auslaufen bzw. nicht abgekantet sind. Die Überlappungsstrecke zwischen den Dämmfolien 6$^I$ und 6$^{II}$ ist wieder mit 10 bezeichnet. Jedoch ist die Ausbildung der Konvektionsdichtung an den Gehäuseblechen 8c, 8d verbessert. In der rechten Hälfte der Fig. 6 im Bereich der Außenseite AS ist dargestellt, daß die Gehäusebleche 8d$^{II}$ und 8d$^I$ der Bausteinteile II, I mit einer Zunge 17 und mit durch eine Blechverdoppelung gebildeten Tasche 18 wechselseitig im Schiebesitz ineinandergreifen, wobei durch den Anschlag des Zungenendes 17 am jeweiligen Taschengrund 18a das Kleinstmaß des Bausteins 2b in der Schubrichtung LS definiert ist. Die Tasche 18 ist ersichtlich dadurch gebildet, daß ein an seinem oberen Randbereich abgekröpftes Gehäuseblech 8.1 im Bereich 19 durch Punkt- bzw. Linienschweißung mit dem äußeren Blech 8d$^I$ verbunden ist. Der Abstand zwischen den Blechlagen 8.1 und 8d$^I$ ist mit c bezeichnet und so gewählt, daß ein konvektionsdichter Schiebesitz ermöglicht ist.

Im linken Teil der Fig. 6 (Innenseite IS) ist durch wechselseitigen Eingriff von Gehäuseblechzungen 19$^I$ des Bausteins I und 19$^{II}$ des Bauteils II einerseits in durch im Querschnitt haarnadelförmige Abbiegungen gebildete Taschen 20$^{II}$ des Bauteils II bzw. 20$^I$ des Bauteils I andererseits das Größtmaß des Bausteins 2b in der Schubrichtung LS definiert. Die haarnadelförmigen Abbiegungen des Gehäusebleches 8c$^I$ sind mit 21$^I$ und die des Bauteils 8c$^{II}$ mit 21$^{II}$ bezeichnet. Bei der Herstellung eines solchen Bausteins nach Fig. 3 oder 6 wird zweckmäßig so vorgegangen, daß die in tangentialer Richtung TS weisenden Gehäusebleche noch nicht angebracht sind, so daß die beiden Bausteinhälften I und II an diesen Seiten 8e, 8f (vgl. Fig. 8) noch offen sind und ineinandergeschoben werden können. Da in dieser Tangential- bzw. Horizontal-Richtung normalerweise keine Konvektion auftritt, weil in dieser Richtung keine Temperaturdifferenzen vorhanden sind, so können die Bausteine in dieser Richtung offen ausgeführt werden. Es ist jedoch dann, wenn z. B. ein Spritzwasserschutz gewährleistet sein soll, möglich, nach dem Ineinanderschieben der Bausteinhälften I und II auch die in Richtung TS weisenden Seitenflächen mit Gehäuseblechen abzudecken, welche entsprechend zur Darstellung der Gehäusebleche 8c, 8d in Fig. 3 und 6 mit einem konvektionsdichtenden Zungen-Taschen-Eingriff zu versehen sind. Der Baustein nach Fig. 6 kann — wie erwähnt — in Schubrichtung LS nicht weiter auseinandergezogen werden als bis der Taschengrund 21$^{I}$ gegen das Zungenende 19$^{II}$ sowie der Taschengrund 21$^{II}$ gegen das Zungenende 19$^{I}$ anschlägt. Andererseits ist das Kleinstmaß des Bauteils 2b in Schubrichtung LS durch den Abstand des Zungenendes 17a vom Taschengrund 18a auf der Seite AS definiert.

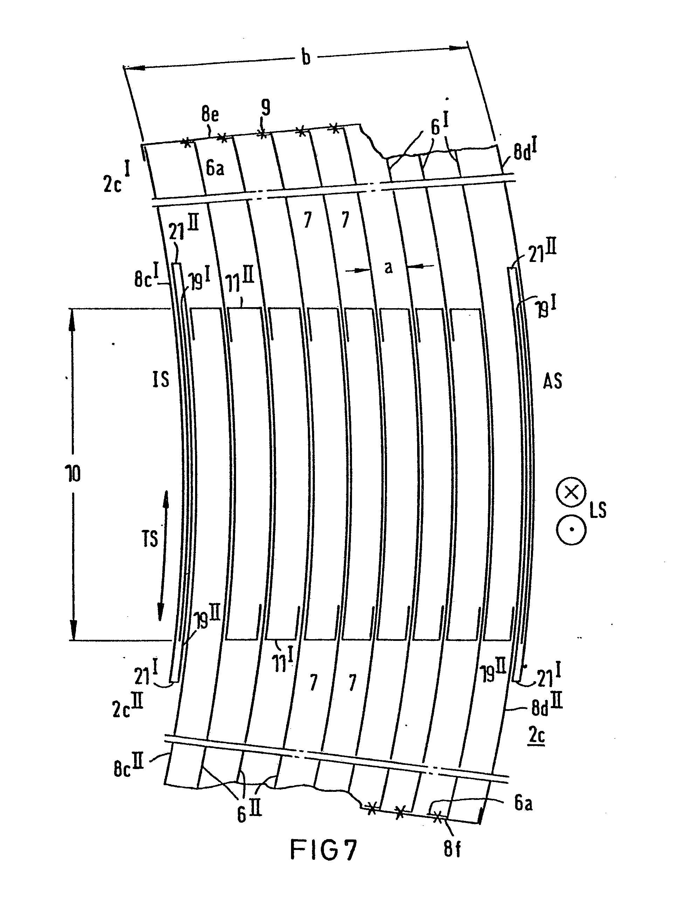

Fig. 7 zeigt den Teilschnitt nach der Linie VII-VII aus Fig. 1. Es sind wieder im Ausschnitt zwei Bausteinhälften I und II eines als tangentiale Schiebekassette dienenden Bausteins 2c dargestellt. Die tangentiale Schubrichtung ist wieder mit TS und die Längsschubrichtung mit LS bezeichnet. Letztere ist, da sie aus der Papierebene bzw. in die Papierebene hineingerichtet ist, mit einer Pfeilspitze und einem Pfeilschwanz symbolisiert. Der Eingriff der Gehäusebleche 8c$^{I}$ und 8c$^{II}$ bzw. 8d$^{I}$ und 8d$^{II}$ auf der Innenseite IS und auf der Außenseite AS ist so wie im linken Teil (IS) der Fig. 6 dargestellt. Entsprechende Teile sind deshalb auch mit den gleichen Bezugszeichen versehen. Der wechselseitige Eingriff der Dämmfolien 6$^{I}$ und 6$^{II}$ ist prinzipiell so wie anhand der Fig. 3 bereits erläutert; deshalb ist die Überlappungsstrecke wieder mit 10 bezeichnet. Die Dämmfolien 6$^{I}$ und 6$^{II}$ sind an ihren den seitlichen Gehäuseblechen 8e, 8f zugewandten Enden zweckmäßigerweise wieder mit Abkantungen 6a versehen und mit diesen Abkantungen 6a an den Innenseiten der Gehäusebleche 8e, 8f mittels Punktschweißen (Punktschweißstellen 9) befestigt. Somit ist wieder der Fixpunkt der Wärmedehnung für die Dämmfolien 6 definiert, die sich mit ihren freien Enden ungehindert thermisch ausdehnen können und mit ihren Abkantungen 11 bzw. 11$^{I}$, 11$^{II}$ an den benachbarten Dämmfolien 6 elastisch-dichtend unter Schiebesitz anliegen. Der Baustein 2c nach Fig. 7 ist also zur Anpassung der Wärmedämmung 2 (siehe Fig. 1, 2) in der Horizontal- bzw. Tangential-Richtung TS an die zu dämmende Komponente (bzw. an eine nicht dargestellte Rohrleitung) vorgesehen, wozu dieser Baustein 2c in der Horizontal- bzw. Tangential-Richtung TS in seinen Maßen durch Zusammenschieben oder Auseinanderziehen innerhalb der Überlappungsstrecke 10 in seinen Maßen einstellbar ist.

Fig. 8 zeigt perspektivisch eine Axial- bzw. Tangential-Schiebekassette 2d, die in Fig. 1 und 2 durch die kombinierte Schubrichtung TLS symbolisiert ist. Man kann sich diesen Kombinationsbaustein dadurch entstanden denken, daß die beiden Bausteinhälften 2d$^{I}$ und 2d$^{II}$ nach Art der Fig. 7 in Tangential-Richtung TS einen Schiebesitz bilden und entsprechend dazu die beiden Bausteinhälften 2d$^{III}$ und 2d$^{IV}$ einen solchen Schiebesitz bilden. Die beiden unteren Bausteinhälften — diese müßte man jetzt eigentlich als Quadranten bezeichnen — sind in ihren Abmessungen aber so ausgebildet, daß die Bausteinhälfte 2d$^{III}$/2d$^{IV}$ in die Bausteinhälfte 2d$^{I}$/2d$^{II}$ in Schubrichtung LS eingeschoben werden kann und in dieser Schubrichtung auch einen Gleitsitz bildet. Der besseren Übersicht wegen ist das Gehäuseblech für die Gehäusedeckfläche 8a weggelassen, ferner ist in sogenannter Phantom-Darstellung der Schiebesitz im mittleren Bereich des Kombinationsbausteins 2d angedeutet. Aus Fig. 8 ist also ersichtlich, daß zwei Bausteinhälften-Paare 2d$^{I}$/2d$^{II}$ und 2d$^{III}$/2d$^{IV}$ mit ihren Dämmfolien 6, und zwar im einzelnen 6$^{I}$, 6$^{II}$, 6$^{III}$ und 6$^{IV}$, und Gehäuseblechen 8c, 8d, 8e, 8f und (nicht dargestellt) 8a, 8b wechselseitig ineinandergeschachtelt sind zur Bildung eines Kombinations-Bausteins 2d, der sowohl in Horizontal- bzw. Tangential-Richtung TS als auch in Vertikal- bzw. Axial-Richtung LS in seinen Maßen einstellbar ist.

Als Ganzes mit 22 und für die einzelnen Quadranten mit 22$^{I}$, 22$^{II}$, 22$^{III}$ und 22$^{IV}$ bezeichnet sind sogenannte Konstanthalter oder Abstandshalter. Das sind Bauelemente, wie sie z. B. aus Fig. 3 der DE-A1-2 624 634 im einzelnen hervorgehen. Es handelt sich dabei um Schraubkörper aus wärmedämmendem druckfestem Material, z. B. Austenit, welche an ihrem einen Ende jeweils mit einem Außengewindezapfen und an ihrem anderen Ende mit einer Gewindebohrung versehen sind, wobei die Körper jeweils zwischen zwei einander benachbarten Folien 6 eingefügt sind und mit ihrem Gewindezapfen jeweils gleichachsige Bohrungen 23 in den Folien 6 durchdringen. Fig. 8a zeigt in schematischer Darstellung im Ausschnitt einen solchen Konstanthalter 22. Durch diese Konstanthalter wird insbesondere die Verwindungssteifigkeit und Druckfestigkeit der Bausteinhälften 2d verbessert. Dies hat Bedeutung in jenen Fällen, wo die Bausteine mechanischen Beanspruchungen unterworfen sind. So werden z. B. am Innenumfang der Isolierung 2 (vgl. Fig. 1, 2) vertikale Fahrschienen angebracht um damit auf Rollen laufende Leitern zu lagern. Auf diese Weise ist jeder Punkt der Außenwandung des Reaktordruckbehälters 1 durch Bedienungspersonal (in Strahlungsschutzanzügen) erreichbar. Die Konstanthalter 22 gewährleisten dabei einen Schutz gegen Ausbeulen oder Eindrücken der einzelnen Bausteine und sind dann an jedem einzelnen Baustein 2a, 2b, 2c oder 2d vorgesehen. Im Falle, daß die beschriebenen mechanischen Beanspruchungen nicht auftreten oder vorliegen, können die Konstanthalter auch fortgelassen werden, was eine Vereinfachung im Aufbau und in der Herstellung bedeutet. Mit 24

deten Taschen (18) ihrer in Schiebesitz aneinandergleitenden Gehäusebleche (8dᴵ, 8dᴵᴵ) wechselseitig ineinandergreifen, wobei durch den Anschlag des Zungenendes (17a) am jeweiligen Taschengrund (18a) das Kleinstmaß des Bausteins (2b, 2c) in der jeweiligen Schubrichtung (LS, TS) definiert ist.

9. Wärmedämm-Baustein nach Anspruch 8, dadurch gekennzeichnet, daß durch wechselseitigen Eingriff von Gehäuseblechzungen (19) des einen Bausteinteils (I oder II) in durch im Querschnitt haarnadelförmige Abbiegungen gebildete Taschen (20) des Gegen-Bausteinteils (II oder I) das Größtmaß des Bausteins (2b, 2c) in der jeweiligen Schubrichtung (LS, TS) definiert ist.

10. Wärmedämm-Baustein nach einem der Ansprüche 4 bis 9, dadurch gekennzeichnet, daß zwei Bausteinhälften-Paare (2dᴵ/2dᴵᴵ und 2dᴵᴵᴵ/2dᴵⱽ) mit ihren Dämmfolien (6) und Gehäuseblechen (8) wechselseitig ineinandergeschachtelt sind zur Bildung eines Kombinations-Bausteins (2d), der sowohl in Horizontal- bzw. Tangential-Richtung (TS) als auch in Vertikal- bzw. Axial-Richtung (LS) in seinen Maßen einstellbar ist.

11. Wärmedämm-Baustein nach einem der Ansprüche 1 bis 10, dadurch gekennzeichnet, daß die Dämmfolien (6) der Bausteinteile (2b, 2c, 2d) auf ihrer der Schiebesitz-Verschachtelung abgewandten Seite jeweils abgekantet und mit ihren Abkantungen (6a) an zugehörigen anstoßenden Gehäuseblechen (8) befestigt, insbesondere angeschweißt sind.

12. Wärmedämm-Baustein nach einem der Ansprüche 1 bis 11, dadurch gekennzeichnet, daß er als Kassette ausgebildet ist und hierzu an allen sechs Begrenzungsflächen, d. h. an Grund- und Deckfläche (8b, 8a), an den beiden Stirnflächen (8e, 8f) sowie an der Innen- und Außenfläche (8c, 8d) mit Gehäuseblechen (8) versehen ist.

13. Wärmedämm-Baustein nach einem der Ansprüche 5 bis 7 mit gewölbten Dämmfolien, dadurch gekennzeichnet, daß die Dämmfolien (6) im Bereich ihrer Abbiegungen bzw. Abkantungen (11) geschlitzt sind.

14. Wärmedämm-Baustein nach Anspruch 13, dadurch gekennzeichnet, daß die Dämmfolien (6) im Bereich ihrer Abbiegungen oder Abkantungen (11) mit einer Kaschierfolie (15) abgedeckt sind, deren Wandstärke wesentlich kleiner als diejenige der Dämmfolien (6) ist.

**Claims**

1. An all-metal construction thermal insulating building block, the dimensions of which can be varied, comprising metallic insulating foils which are spaced from one another and mounted so as to be thermally mobile, and which form insulating cells lying between them, spacing elements which space the insulating foils from one another, and casing plates which carry and at least partially surround the insulating foils and spacing elements, characterized in that the building block (2b, 2c, 2d) consists of at least two building block parts which with their casing plates (8) and with their insulating foils (6), are in each case mutually packed in one another juxtaposed in a convection-retarding sliding fit; and that in the direction of thrust (LS, TS) of the sliding-fit, overlapping sections (10) exist in each case between the juxtaposed insulating foils (6) and casing plates (8), which sections are greater than the predetermined maximum enlargement of the building block (2b, 2c, 2d) produced by pulling apart parts of the building block in the direction of thrust.

2. A thermal insulating block according to claim 1, characterized in that, it is provided for matching a heat insulation (2), made of thermal insulation building blocks (2a) which can be fitted together and which in the cold state are practically dimensionally stable, to the component (1, RDB), or pipeline, which is to be insulated, in the axial or vertical direction (LS), as the case may be, and, for this purpose, in the direction of the insulation thickness (DD) and in the horizontal or peripheral direction (TS), as the case may be, exhibits fixed dimensions corresponding in the above-mentioned sense to the dimensionally stable thermal in the vertical or axial direction (LS), as the case may be, it is adjustable as regards its dimensions.

3. A thermal insulating building block according to claim 1, characterized in that, it is provided for matching a thermal insulation (2), made of thermal insulation building blocks (2a) which can be fitted together and which in the cold state are practically dimensionally stable, to the component (1, RDB) or pipeline which is to be insulated, in the horizontal or tangential direction (TS), as the case may be, and, for this purpose, in the direction of the insulation thickness (DD) and in the vertical or axial direction (LS), as the case may be, exhibits fixed dimensions which correspond in the above-mentioned sense to dimensionally stable thermal insulation building blocks, whilst in the horizontal or tangential direction (TS), as the case may be, it is adjustable as regards its dimensions.

4. A thermal insulating building block according to claim 1, characterized in that it is provided for matching a thermal insulation (2), made of thermal insulation building blocks (2a) which can be fitted together and which in the cold state are practically dimensionally stable, to the component or pipeline which is to be insulated, in the vertical or axial direction (LS), as the case may be, and in the horizontal or tangential direction (TS), as the case may be, and, for this purpose, in the direction of the insulation thickness (DD) exhibits fixed dimensions which correspond to the thermal insulation building blocks (2a) which are dimensionally stable in the above-mentioned sense, whilst in the vertical or axial direction (LS), as the case may be, and in the horizontal or tangential direction (TS), as the case may be, it is adjustable as regards its dimensions.

5. A thermal insulating building block according to one of claims 1 to 4, characterized in that the insulating foils (6) of at least one building block part (I or II) are provided at their free ends with bent-over portions (11) which bridge the insulating cell (7) in question in such a way that at their bentover portions (11) they abut at least linearly against the adjoining insulating foils (6) in the direction of the insulation thickness (DD) of the counter-building block part in elastically sealing manner.

6. A thermal insulating building block according to claim 5, characterized in that each of its building block parts (I, II) is provided at the free ends of its insulating foils (6) with bent-over portions (11), and the building block parts (I, II) are mutually packed in pairs at their bent-over portions (11).

7. A thermal insulating building block according to claim 6, characterized in that the bent-over portions (11) at the free ends of the insulating foils (6) are, in each case, formed as double folds, and the folds of the first building block part (I) are arranged to be approximately point-symmetrical with respect to the folds of the counter-building part (II).

8. A thermal insulating building block according to one of claims 1 to 7, characterized in that building block part and counter-building block part (I, II) mutually engage in one another by means of tongues (17) and pockets (18), (formed by doubling the plate) of their casing plates (8d$^I$, 8d$^{II}$) which slide on one another in the sliding fit, the impact of the end of the tongue (17a) against the bottom of the pocket (18a) in question defines the minimum dimension of the building block (2b, 2c) in the direction of thrust (LS, TS) under consideration.

9. A thermal insulating building block according to claim 8, characterized in that the maximum dimension of the building block (2b, 2c) in the direction of thrust (LS, TS) under consideration, is defined by the mutual engagement of casing plate tongues (19) of the first building block part (I or II) in pockets (20), formed by bends which are hairpin-shaped in cross-section, of the counter-building block part (II or I).

10. A thermal insulating building block according to one of claims 4 to 9, characterized in that two pairs of building block halves (2d$^I$/2d$^{II}$ and 2d$^{III}$/2d$^{IV}$) are mutually packed in one another with their insulating foils (6) and casing plates (8), so as to form a combined building block (2d) which is adjustable as regards its dimensions both in the horizontal or tangential direction (TS), as the case may be, and also in the vertical or axial direction (LS), as the case may be.

11. A thermal insulating block according to one of claims 1 to 10, characterized in that on their side facing away from the sliding-fit packing, the insulating foils (6) of the parts of the building block (2b, 2c, 2d) are folded and by means of their folded portions (6a) are attached, in particular welded, to associated abutting casing plates (8).

12. A thermal insulating building block according to one of claims 1 to 11, characterized in that it is designed as a cassette and, for this purpose, is provided with casing plates (8) at all six boundary surface, i. e. on the bottom and top surfaces (8b, 8a), at the two end surfaces (8e, 8f), and at the inner and outer surface (8c, 8d).

13. A thermal insulating building block according to one of claims 5 to 7 having curved insulating foils, characterized in that the insulating foils (6) are slotted in the region of their bends or folds (11).

14. A thermal insulating building block according to claim 13, characterized in that, in the region of their bends or folds (11), the insulating foils (6) are covered by a covering foil (15), the wall thickness of which is substantially less than that of the insulating foils (6).

**Revendications**

1. Elément de construction calorifuge de réalisation totalement métallique, dont les cotes peuvent être modifiées, comportant des feuilles isolantes métalliques distantes les unes des autres, montées de façon à pouvoir se déplacer sous l'effet de la chaleur et servant à former des cellules isolantes intercalaires et comportant des éléments d'entretoisement maintenant les feuilles isolantes à une distance réciproque, et portant et entourant au moins partiellement les feuilles isolantes et les éléments d'entretoisement, caractérisé par le fait que l'élément de construction (2b, 2c, 2d) est constitué par au moins deux parties qui sont imbriquées réciproquement en étant l'une contre l'autre, selon un ajustement glissant empêchant la convection, par leurs tôles de logement (8) et par leurs feuilles isolantes (6), et que suivant la direction de poussée (LS, TS) de l'ajustement glissant il est prévu, au niveau des feuilles isolantes (6) et des tôles de logement (7) disposées les unes contre les autres, des zones de recouvrement (10) qui sont d'une taille supérieure à l'accroissement maximal prédéterminé de l'élément de construction (2b, 2c, 2d) sous l'effet d'un écartement des parties de l'élément de construction suivant la direction de poussée.

2. Elément de construction calorifuge suivant la revendication 1, caractérisé par le fait qu'il est prévu pour l'adaptation d'un calorifugeage (2), constitué par des éléments de construction calorifuges (2a) pouvant être réunis côte-à-côte et dont les cotes sont pratiquement constantes à l'état froid, au composant (1, RDB) ou à la conduite tubulaire, devant être calorifugée, suivant la direction axiale ou verticale (LS) et qu'à cet effet, il comporte des cotes fixes suivant la direction de l'épaisseur (DD) du calorifugeage et suivant la direction horizontale ou périphérique (TS), et correspondant, dans le sens indiqué, aux éléments de construction calorifuge (2a) possédant des cotes constantes, tandis que ses cotes sont réglables suivant la direction verticale ou axiale (LS).

3. Elément de construction calorifuge suivant la revendication 1, caractérisé par le fait qu'il est prévu pour l'adaptation d'un calorifugeage (2) constitué par des éléments de construction calorifuges (2a) pouvant être réunis côte-à-côte et possédant des cotes pratiquement constantes à l'état froid, au composant (1, RDB) ou à la conduite tubulaire devant être calorifugée, suivant la direction horizontale ou tangentielle (DS), et qu'à cet effet, il possède des dimensions fixes suivant la direction de l'épaisseur (DD) du calorifugeage et suivant la direction verticale ou axiale (LS) et correspondant aux éléments de construction calorifuges possédant des cotes constantes dans le sens indiqué, tandis que ses cotes peuvent être réglées suivant la direction horzontale ou tangentielle (TS).

4. Elément de construction calorifuge suivant la revendication 1, caractérisé par le fait qu'il est prévu pour l'adaptation d'un calorifugeage (2), constitué par des éléments de construction calorifuge (2a) pouvant être réunis cote-à-cote et possédant des cotes pratiquement constantes à l'état froid, au composant ou à la conduite tubulaire devant être calorifugée, suivant la direction vertical ou axiale (LS) et suivant la direction horizontale ou tangentielle (TS), et qu'il possède à cet effet des dimensions fixes suivant la direction de l'épaisseur (DR) du calorifugeage et correspondant aux éléments de construction calorifuges (2a) possédant des cotes constantes dans le sens indiqué, tandis que ses cotes sont réglables suivant la direction verticale ou axiale (LS) et suivant la direction horizontale ou tangentielle (TS).

5. Elément de construction calorifuge suivant l'une des revendications 1 à 3, caractérisé par le fait que les feuilles isolantes (6) d'au moins une partie (I ou II) de l'élément de construction sont munies, sur leurs extrémités libres, de parties repliées (11) traversant la cellule isolante considérée (7), de telle sorte qu'elles s'appliquent par les parties repliées (11) contre les feuilles isolantes (6), voisines suivant la direction de l'épaisseur (DD) du calorifugeage, de la partie opposée de l'élément de construction d'une manière élastique et étanche et au moins selon une forme linéaire.

6. Elément de construction calorifuge suivant la revendication 5, caractérisé par le fait que chacune de ces parties (I, II) est munie des parties repliées (11) au niveau des extrémités libres de ses feuilles isolantes (6) et que les parties (I, II) de l'élément de construction sont emboîtes réciproquement par couple les unes dans les autres par leurs parties repliées (11).

7. Elément de construction calorifuge suivant la revendication 6, caractérisé par le fait que les parties repliées (11) sont réalisées sous la forme de bords rabattus doubles au niveau des extrémités libres des feuilles isolantes (6) et que les bords rabattus d'une partie (I) de l'élément de construction sont disposées approximativement suivant une symétrie ponctuelle par rapport aux bords rabattus de la partie antagoniste (II) de l'élément de construction.

8. Elément de construction calorifuge suivant l'une des revendications 1 à 7, caractérisé par le fait que la partie et la partie antagoniste de l'élément de construction (I, II) s'interpénètrent réciproquement par des languettes (17) et par des poches (18), formées par doublage de la tôle, de leurs tôles de logement (8d$^I$, 8d$^{II}$) glissant l'une contre l'autre selon un ajustement glissant, la dimension minimale de l'élément de construction (2b, 2c) suivant la direction de poussée respective (LS, TS) étant définie par la venue en butée de l'extrémité (17a) de la languette contre le fond (18a) de la poche.

9. Elément de construction calorifuge suivant la revendication 8, caractérisé par le fait que la dimension maximale de l'élément de construction (2b, 2c) suivant la direction respective de poussée (LS, TS) est définie par l'engrènement réciproque des languettes (19) des tôles de logement d'une partie (I ou II) de l'élément de contruction dans des poches (20) de la partie antagoniste (II ou I) de l'élément de construction, formées par des parties repliées en forme d'épingle à cheveux en coupe transversale.

10. Elément de construction calorifuge suivant l'une des revendications 4 à 9, caractérisé par le fait que deux couples de moitiés d'éléments de construction (2d$^I$/2d$^{II}$ et 2d$^{III}$/2d$^{IV}$) imbriquées réciproquement par leurs feuilles isolantes (6) et par les tôles de logement (8) de manière à former un élément de construction combiné (8d) dont les cotes peuvent être réglées aussi bien suivant la direction horizontale ou tangentielle (TS) que suivant la direction verticale ou axiale (LS).

11. Elément de construction calorifuge suivant l'une des revendications 1 à 10, caractérisé par le fait que les feuilles isolantes (6) des parties d'éléments de construction (2b, 2c, 2d) sont repliées sur leur face tournée à l'opposé de l'emboîtement avec ajustement glissant et sont fixées, notamment par soudage, par leurs parties repliées (6a) sur des tôles de logement (8) associées en aboutement.

12. Elément de construction calorifuge suivant l'une des revendications 1 à 11, caractérisé par le fait qu'il est réalisé en forme de cassette et qu'à cet effet, is est équipé de tôles de logement (8) sur l'ensemble des six surfaces de limitation, c'est-à-dire sur les surfaces de base et de couvercle (8b, 8e) sur les deux surfaces frontales (8e, 8f) ainsi que sur la surface intérieure et sur la surface extérieure (8c, 8d).

13. Elément de construction calorifuge suivant l'une des revendications 5 à 7, comportant des feuilles isolantes cintrées, caractérisé par le fait que les feuilles isolantes (6) sont fendues dans la région de leurs parties repliées ou de leurs bords rabattus (11).

14. Elément de construction calorifuge suivant la revendication 13, caractérisé par le fait que les feuilles isolantes (6) sont recouvertes, dans la région de leurs parties repliées ou de leurs bords rabattus (11), par une feuille de doublage (15) dont l'épaisseur est nettement inférieure à celle des feuilles isolantes (6).

FIG 1

FIG 2

FIG 3

FIG 4c

FIG 4a

$6^{II}$

11

14

12

14

FIG 4

$6^{I}$

$6^{II}$

13

$6^{I}$

$13^{II}b$

$13^{II}a$

$13^{II}$

FIG 4b

$14^{I}$

$6^{II}$

$13^{I}$

$6^{I}$

FIG 5

$6^{II}$

FIG 5b

$13^{I}$

$6^{I}$

FIG 5a

16

16

15

FIG 5c

16

16

$13^{I}$

$11^{I}$

0258

FIG 6

FIG 7

FIG 8

FIG 8a